## Europäisches Patentamt

## European Patent Office

## Office européen des brevets

(11) Veröffentlichungsnummer: **0 045 951**
**B1**

(12) # EUROPÄISCHE PATENTSCHRIFT

(45) Veröffentlichungstag der Patentschrift:
21.11.84

(51) Int. Cl.³: **H 02 P 5/40, H 02 P 13/18**

(21) Anmeldenummer: **81106171.2**

(22) Anmeldetag: **06.08.81**

(54) Verfahren zum Betrieb eines Umrichters mit Gleichstromzwischenkreis zur Speisung einer Drehfeldmaschine.

(30) Priorität: **12.08.80 DE 3030465**

(43) Veröffentlichungstag der Anmeldung:
**17.02.82 Patentblatt 82/7**

(45) Bekanntmachung des Hinweises auf die Patenterteilung:
**21.11.84 Patentblatt 84/47**

(84) Benannte Vertragsstaaten:
**AT CH DE FR GB IT LI NL SE**

(56) Entgegenhaltungen:
**US - A - 3 872 364**
**US - A - 3 887 862**

**TECHNISCHE MITTEILUNGEN AEG-TELEFUNKEN,
Band 67, Nr. 1, 1977, Seiten 20-25 Berlin, DE. R. SAUPE
et al.: "Maschinengeführter Umrichter zur
Drehzahlregelung von Synchronmaschinen"**

(73) Patentinhaber: **Siemens Aktiengesellschaft, Berlin und
München Wittelsbacherplatz 2, D-8000 München 2 (DE)**

(72) Erfinder: **Blümner, Christoph, Dipl.-Ing.,
Riemenschneider Strasse 68, D-8552 Höchstadt/Aisch
(DE)**

**Beschreibung**

Die Erfindung betrifft ein Verfahren zum Betrieb eines Umrichters mit Gleichstromzwischenkreis, einem Wechselrichter mit Stromrichterventilen in Drehstrombrückenschaltung und einer Drehfeldmaschine als Last, bei dem bei Drehzahlen der Drehfeldmaschine, die größer als eine maschinenbedingte Mindestdrehzahl sind, der Umrichter lastgeführt ist und die Kommutierungsspannung für die Stromrichterventile des Wechselrichters von der Drehfeldmaschine geliefert wird und bei dem bei Drehzahlen, die kleiner als die Mindestdrehzahl sind, die Stromrichterventile des Wechselrichters mit einer Hilfskommutierungseinrichtung kommutiert werden, wobei wenigstens bei Drehzahlen, die größer als die Mindestdrehzahl sind, in einer Drehperiode eine sechsmalige zyklische Kommutierung stattfindet, bei der alternierend in beiden Brückenhälften der Drehstrombrücke jeweils vom Stromrichterventil eines Stromrichterzweigs auf ein nachfolgend stromführendes Stromrichterventil eines Stromrichterzweigs der gleichen Brückenhälfte kommutiert wird.

Ein solches Verfahren zum Betrieb eines solchen Umrichters, auch Stromrichtermotor genannt, ist beispielsweise aus der Siemens-Zeitschrift 45 (1971), Seiten 753 bis 757 oder aus der DE-PS 2 246 562 bekannt. Die Taktung des Wechselrichters erfolgt bei diesem Umrichter lastabhängig, die Kommutierungsblindleistung liefert die Drehfeldmaschine synchroner Bauart.

Bei diesem Umrichter kann die Blindleistung für die Kommutierung des Motorstromes erst ab einer gewissen, maschinenbedingten Betriebsdrehzahl vom Motor selbst zur Verfügung gestellt werden. Im Drehzahlbereich, der zwischen Null und dieser Mindestdrehzahl liegt, die etwa einem Zehntel der Nenndrehzahl des Stromrichtermotors entspricht, muß daher auf gesonderte Kommutierungshilfen, insbesondere beim Anfahren zurückgegriffen werden, mit denen der Bereich kleiner Drehzahlen mit Hilfe einer zusätzlichen Hilfskommutierungseinrichtung bzw. eines zusätzlichen Hilfs- bzw. Anfahrkommutierungsverfahrens, durchfahren werden, das entsprechende Umschaltungen bewirkt.

Aus der obengenannten Literaturstelle ist es bekannt, durch einen Steuereingriff in den netzseitigen Gleichrichter oder durch Zünden eines gesteuerten Nebenwegventils, das als Schalter die Zwischenkreisdrossel kurzschließt, den Zwischenkreisstrom jedesmal für eine kurze Zeitspanne zu Null zu machen, in der der Strom zum nächsten Maschinenstrang weitergeschaltet werden soll. Andere Hilfskommutierungseinrichtungen, bei denen der Zwischenkreisstrom vor jeder Kommutierung kurzgeschlossen wird, sind beispielsweise aus der DE-PS 2 246 562 oder der DE-PS 2 246 592 bekannt. Diese Hilfskommutierungseinrichtungen sind auch für größere Anlaufmomente und Leistungen geeignet.

Bei Drehfeldmaschinen hoher Nenndrehzahl oder bei höherpoligen Maschinen erreichen die bekannten Hilfskommutierungsverfahren ihre Grenzfrequenz, bevor die erforderliche Mindestdrehzahl erreicht ist und der nunmehr lastgeführte Wechselrichter den Motorstrom mit Hilfe der Maschinenspannung kommutieren kann. In solchen Fällen müssen andere, aufwendige Anlaufeinrichtungen, beispielsweise Anwurfmotoren oder Anlauftransformatoren eingesetzt werden.

Es besteht die Aufgabe, das Verfahren der eingangs genannten Art so weiterzubilden, daß der Drehzahlbereich, in dem zwangskommutiert wird, die Grenzfrequenzen herkömmlicher Hilfskommutierungseinrichtungen übersteigen kann.

Erfindungsgemäß wird diese Aufgabe dadurch gelöst, daß die Drehzahlen, die kleiner als die Mindestdrehzahlen sind, in wenigstens zwei Drehzahlbereiche unterteilt werden, daß in einem ersten, bei der Drehzahl Null beginnenden Drehzahlbereich die sechsmalige Kommutierung pro Drehperiode beibehalten wird und daß in einem sich an den ersten Drehzahlbereich anschließenden zweiten Drehzahlbereich eine dreimalige zyklische Kommutierung pro Drehperiode stattfindet, bei der bei jeder Kommutierung in den Stromrichterzweigen beider Brückenhälften der Drehstrombrückenschaltung gleichzeitig vom Stromrichterventil eines Stromrichterzweiges auf ein nachfolgend stromführendes Stromrichterventil eines anderen Stromrichterzweiges kommutiert wird.

Bei dem erfindungsgemäßen Verfahren wird im zweiten Drehzahlbereich, der mit der Mindestdrehzahl endet, nicht jede der beim bekannten Verfahren üblichen Kommutierungen, sondern nur jede zweite Kommutierung ausgeführt. Der Drehzahlbereich der Zwangskommutierung wird damit bezüglich der Grenzfrequenz der Hilfskommutierungseinrichtung bzw. des -verfahrens verdoppelt, wobei die Hilfskommutierungseinrichtung unverändert bleibt. Zu betonen ist dabei noch, daß für die Drehzahlen im ersten Drehzahlbereich das volle Drehmoment erhalten bleibt, was insbesondere beim Anfahren für das Losreißmoment wesentlich ist. Im zweiten Drehzahlbereich sinkt zwar der Mittelwert des Drehmomentes ab und es tritt eine Momentenwelligkeit auf, dies stört aber normalerweise in diesem Drehzahlbereich nicht.

Vorzugsweise findet in einem sich an den zweiten Drehzahlbereich anschließenden dritten Drehzahlbereich nur eine zweimalige zyklische Kommutierung pro Drehperiode statt, wobei die Drehstrombrücke als Einphasenbrücke betrieben wird, wozu die Stromrichterventile von zwei Stromrichterzweigen mit gemeinsamem Hauptanschluß ungezündet bleiben. Bei dieser vorteilhaften Ausgestaltung des erfindungsgemäßen Verfahrens wird im dritten Drehzahlbereich, der nunmehr mit der erforderlichen Mindestdrehzahl endet, nur noch jede dritte Kommutierung im Wechselrichter ausgeführt. Damit kann der Drehzahlbereich der Zwangskommutierung bezüglich der Grenzfrequenz jedes der herkömmlichen Hilfskommutierungsverfahren verdreifacht werden. Der Mittelwert des Drehmomentes in diesem dritten Drehzahlbereich sinkt nur noch geringfügig gegenüber dem Drehmomentmittel im zweiten Drehzahlbereich ab und auch die Momentenwelligkeit erhöht sich nur unwesentlich.

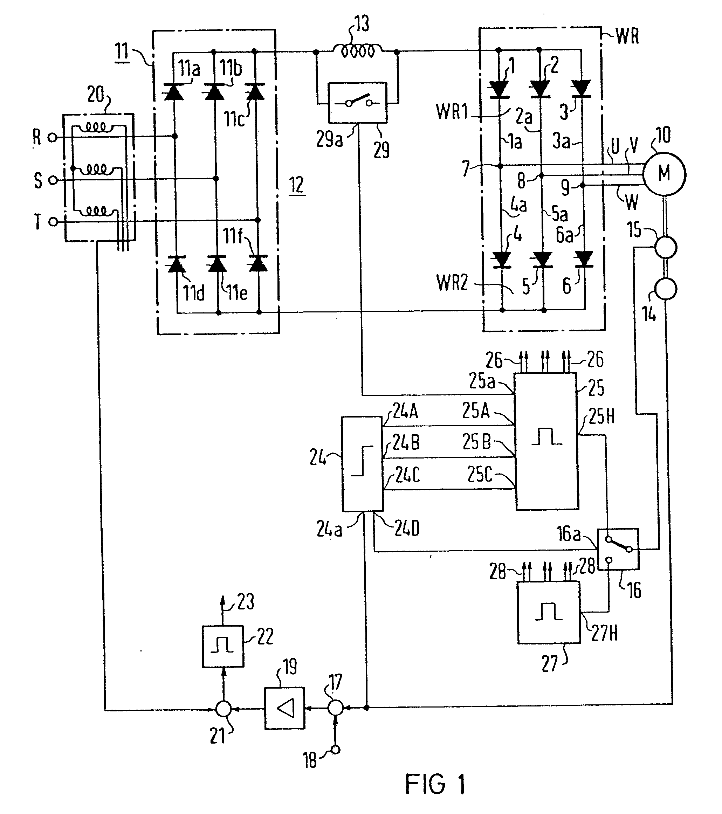

Im folgenden wird das erfindungsgemäße Verfahren beispielhaft anhand der Fig. 1 bis 12 näher erläutert.

Fig. 1 zeigt die Schaltung eines Stromrichtermotors. Ein gesteuerter Wechselrichter WR ist aus steuerbaren Stromrichterventilen 1 bis 6 in Drehstrombrückenschaltung aufgebaut. Die Stromrichterzweige 1a bis 3a und 4a bis 6a jeder Brückenhälfte WR1 und WR2 sind über ihre gemeinsamen Hauptanschlüsse 7 bis 9 mit der dreiphasigen Wicklung einer Synchronmaschine 10 verbunden, an der im Betrieb die Maschinenspannung u, v und w ansteht. Der Wechselrichter WR wird aus einem Drehstromnetz R, S, T über einen gesteuerten Gleichrichter 11 und einen Gleichstromzwischenkreis 12 mit Zwischenkreis bzw. Glättungsinduktivität 13 gespeist. Im Ausführungsbeispiel ist der Gleichrichter 11 aus sechs steuerbaren Stromrichterventilen 11a bis 11f in Drehstrombrückenschaltung aufgebaut. Die steuerbaren Stromrichterventile 1 bis 6 des Wechselrichters WR und die steuerbaren Stromrichterventile 11a bis 11f des Gleichrichters 11 können beispielsweise Thyristoren sein.

Mit dem Läufer des Drehstromsynchronmotors 10 ist ein Tachodynamo 14 und ein beispielsweise permanentmagnetischer oder mit Hallgeneratoren bestückter Rotorlagegeber 15 mechanisch gekoppelt. Die Signale des Läuferstellungsgebers 15 sind einem Umschalter 16 zugeführt. Die den Drehzahlistwert repräsentierenden Signale des Tachodynamos 14 werden in einer Addierstufe 17 mit einem Drehzahlsollwert verglichen, der der Addierstufe 17 über einen Eingang 18 zugeführt ist. Die erhaltene Regelabweichung liegt an einem Drehzahlregler 19, dessen Ausgang zum Vergleich seiner Signalspannung mit den Signalen eines Stromwandlers 20 einer zweiten Addierstufe 21 zugeführt ist. Der Stromwandler 20 ist in der Drehstromspeiseleitung angeordnet. Der Addierstufe 21 ist ein Stromregler 22 hnachgeschaltet, von dem über Leitungen 23 die Stromrichterventile 11a bis 11f des Gleichrichters 11 angesteuert werden. Bezüglich dieser Ansteuerung des Gleichrichters 11 wird auf die obengenannte Literaturstelle verwiesen.

Der mit dem Tachodynamo 14 erfaßte Drehzahlistwert ist außerdem noch dem Eingang 24a eines Grenzwertmelders 24 zugeführt. Der Grenzwertmelder 24 erzeugt in einem ersten Drehzahlbereich I, der mit der Drehzahl Null beginnt, ein Signal A, in einem zweiten Drehzahlbereich II, der sich an den ersten Drehzahlbereich I anschließt, ein Signal B und in einem dritten Drehzahlbereich III, der mit der maschinenbedingten Mindestdrehzahl endet, ein Signal C. Beim Überschreiten der Mindestdrehzahl erzeugt der Grenzwertmelder schließlich ein Signal D. Diese Signale A bis D stehen an den mit gleichen Großbuchstaben versehenen Ausgängen 24A bis 24D des Grenzwertmelders 24 an. Die Ausgänge 24A bis 24C des Grenzwertmelders 24 sind mit Eingängen 25A bis 25C eines ersten Steuersatzes 25 verbunden, von dem über Leitungen 26 die steuerbaren Stromrichterventile 1 bis 6 des Wechselrichters WR angesteuert werden. Der Ausgang 24D des Grenzwertmelders 24 ist mit dem Betätigungseingang 16a des Umschalters 16 verbunden. Über den Ruhekontakt des Umschalters 16 ist der Ausgang des Rotorlagegebers 15 mit einem Eingang 25H des Steuersatzes 25 verknüpft. Der Arbeitskontakt des Umschalters 16 ist mit einem Eingang 27H eines zweiten Steuersatzes 27 verbunden. Überschreitet daher der mit dem Tachodynamo 14 erfaßte Drehzahlistwert die vorgegebene Mindestdrehzahl, so wird von dem Signal D der Ausgang des Rotorlagegebers 15 vom Eingang 25H des Steuersatzes 25 auf den Eingang 27H des Steuersatzes 27 umgeschaltet. Auch vom Steuersatz 27 werden über Leitungen 28 die steuerbaren Stromrichterventile 1 bis 6 des Wechselrichters WR angesteuert. Auf den Aufbau der beiden Steuersätze 25 und 27 wird im folgenden noch näher eingegangen.

Als Hilfskommutierungseinrichtung ist beim Stromrichtermotor nach Fig. 1 beispielhaft ein Schalter 29 vorgesehen, der in bekannter Weise die Zwischenkreisinduktivität 13 überbrückt und im geschlossenen Zustand kurzschließt. Der Betätigungseingang 29a des Schalters 29 ist mit einem Ausgang 25a des ersten Steuersatzes 25 verbunden. Bei Drehzahlen, die kleiner als die maschinenbedingte Mindestdrehzahl ist, wird der Schalter 29 über ein kurzzeitig am Betätigungseingang 29a anstehendes Signal geschlossen, womit in bekannter Weise für jede Kommutierung die Zwischenkreisdrossel kurzgeschlossen und damit der Zwischenkreisstrom für jede Kommutierung kurzzeitig zu Null gemacht wird. Es ist zu betonen, daß anstelle der beispielhaft angeführten Hilfskommutierungseinrichtung 29 jedes andere Hilfskommutierungsverfahren nach dem erfindungsgemäßen Verfahren betrieben werden kann.

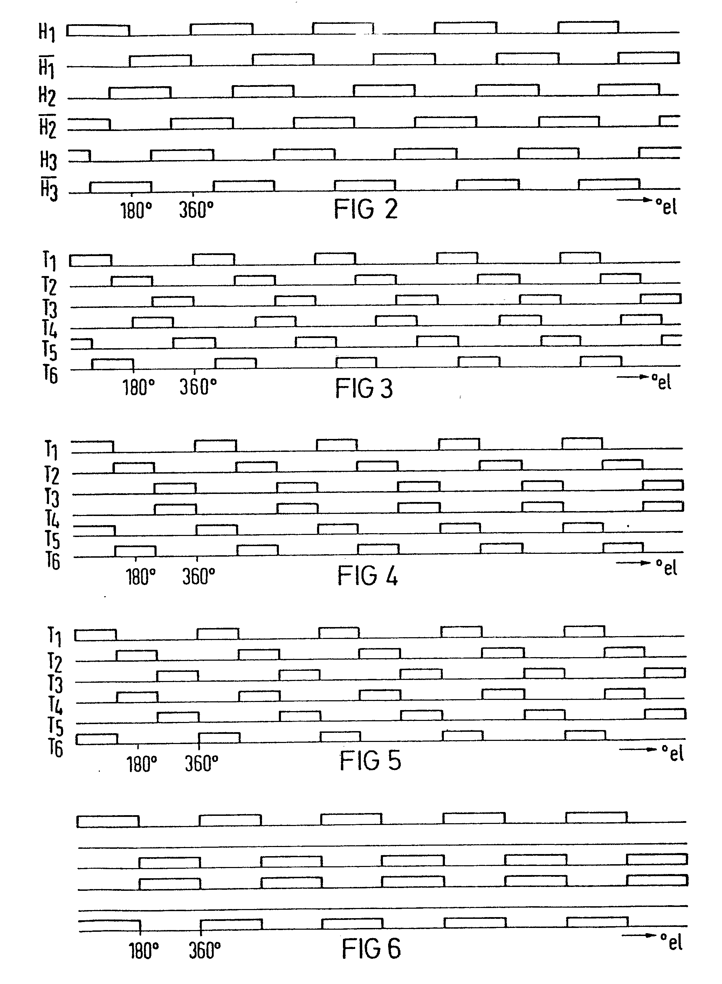

Im folgenden wird das erfindungsgemäße Verfahren zum Betrieb eines Stromrichtermotors gemäß Fig. 1 bei Drehzahlen, die kleiner als die Mindestdrehzahl sind, anhand der Fig. 2 bis 6 näher erläutert, in denen Impulsdiagramme bezogen auf die Drehperiode des Synchronmotors 10 in Grad el aufgetragen sind. Fig. 2 zeigt die vom Rotorlagegeber 15 erzeugten Signale $H_1$ bis $H_3$, deren Länge jeweils 180° el beträgt und die um 120° el gegeneinander verschoben sind. Zu jedem Signal $H_1$ bis $H_3$ wird in einem in Fig. 1 nicht dargestellten Invertierglied das invertierte Signal $\overline{H_1}$ bis $\overline{H_3}$ erzeugt. Die Signale $H_1$ bis $H_3$ und $\overline{H_1}$ bis $\overline{H_3}$ werden über den Umschalter 16 dem Eingang 25H des Steuersatzes 25 zugeführt, solange die Drehzahl des Motors 10 kleiner als seine Mindestdrehzahl ist. In dem Drehzahlbereich I, der mit dem Signal A des Grenzwertmelders 24 bestimmt ist, werden durch die folgenden logischen Verknüpfungsgleichungen

$$H_1 \wedge \overline{H_2} = T_1$$

$$H_2 \wedge \overline{H_3} = T_2$$

$$H_3 \wedge \overline{H_1} = T_3$$

$$\overline{H_1} \wedge H_2 = T_4$$

$$\overline{H_2} \wedge H_3 = T_5$$

$$\overline{H_3} \wedge H_1 = T_6$$

die in Fig. 3 gezeigten Zündimpulse $T_1$ bis $T_6$ für die Stromrichterventile 1 bis 6 erzeugt, deren Bezugszeichen dem Index des entsprechenden Zündimpulses T entspricht. Dem Impulsdiagramm der Fig. 3 ist zu entnehmen, daß während einer Drehperiode des Synchronmotors 10 sechs Kommutierungen stattfinden, wobei alternierend jeweils nur in einer Brückenzweighälfte WR1 bzw. WR2 von einem Stromrichterventil, beispielsweise dem Stromrichterventil 5 auf das nachfolgend stromführende Stromrichterventil, beispielsweise das Stromrichterventil 6 kommutiert wird. Dieses Impulsdiagramm des Drehzahlbereichs I entspricht dem Impulsdiagramm, mit dem der Wechselrichter WR nach Überschreiten der Mindestdrehzahl lastabhängig getaktet wird, wobei die Kommutierungsblindleistung von dem Synchronmotor 10 geliefert wird. Wird der Drehzahlbereich I überschritten, so steht im Drehzahlbereich II nur am Ausgang 24B des Grenzwertmelders 24 das Signal B an. Mit diesem Signal wird im Steuersatz 25 eine logische Verknüpfung gemäß folgenden Beziehungen ausgelöst,

$$H_1 \wedge \overline{H_2} = T_1; \quad H_1 \wedge \overline{H_2} = T_5$$

$$H_2 \wedge \overline{H_3} = T_2; \quad H_2 \wedge \overline{H_3} = T_6 \qquad (1)$$

$$H_3 \wedge \overline{H_1} = T_3; \quad H_3 \wedge \overline{H_1} = T_4$$

bzw.

$$H_1 \wedge \overline{H_2} = T_1; \quad H_1 \wedge \overline{H_2} = T_6$$

$$H_2 \wedge \overline{H_3} = T_2; \quad H_1 \wedge \overline{H_3} = T_4$$

$$H_3 \wedge \overline{H_1} = T_3; \quad H_3 \wedge \overline{H_1} = T_5$$

wobei das Gleichungssystem (1) dem Impulsdiagramm der Fig. 4 und das Gleichungssystem (2) dem Impulsdiagramm der Fig. 5 entspricht. Fig. 4 und 5 ist zu entnehmen, daß im Drehzahlbereich II in jeder Drehperiode nur jede zweite Kommutierung stattfindet, d. h. pro Drehperiode nur dreimal kommutiert wird. Dabei wird in jeder Brückenhälfte WR1 und WR2 gleichzeitig von einem Stromrichterventil, beispielsweise von den Stromrichterventilen 1 und 6 gemäß Fig. 5 gleichzeitig auf die nachfolgend stromführenden Stromrichterventile 2 und 4 kommutiert. Der damit bei unveränderter Hilfskommutierungseinrichtung 29 erhaltene Drehzahlbereich der Zwangskommutierung ist doppelt so groß wie die Grenzfrequenz im Drehzahlbereich I.

Überschreitet schließlich der von dem Tachodynamo 14 abgegebene Drehzahlistwert den Drehzahlbereich II, so steht im Drehzahlbereich III nur am Ausgang 24C des Grenzwertmelders 24 das Signal C an. Mit diesem Signal C wird im Steuersatz 25 eine logische Verknüpfung, beispielsweise gemäß dem folgenden Gleichungssystem erhalten:

$$H_1 = T_1; H_1 = T_6;$$

$$\overline{H_1} = T_3; \overline{H_1} = T_4.$$

Das damit erzeugte und in Fig. 6 gezeigte Impulsraster verdeutlicht, daß im Drehzahlbereich III die Drehstrombrücke WR als Einphasenbrücke betrieben wird, wozu im gesamten Drehzahlbereich III die Stromrichterventile von zwei Stromrichterzweigen mit gemeinsamem Hauptanschluß, gemäß Fig. 6 beispielsweise die Stromrichterventile 2 und 5 mit dem gemeinsamen Hauptanschluß 8 ungezündet bleiben. Damit erhält man bei unveränderter Hilfskommutierungseinrichtung 29 einen Drehzahlbereich für die Zwangskommutierung, der das Dreifache der Grenzfrequenz des Hilfskommutierungsverfahrens ist, die man im Drehzahlbereich I erreicht. Nach Überschreiten der maschinenbedingten Mindestfrequenz steht nur noch am Ausgang 24D des Grenzwertmelders 24 das Signal D an. Mit diesem Signal D werden im Umschalter 16 die Signale $H_1$ bis $\overline{H_3}$ des Rotorlagegebers 15 dem Steuersatz 27 über seinen Eingang 27H aufgeschaltet, womit der Steuersatz 25 und damit die Hilfskommutierungseinrichtung 29 abgeschaltet werden. Im Steuersatz 27 wird lastgetaktet entsprechend den Verknüpfungsgleichungen, die im Zusammenhang mit Fig. 3 angegeben sind, ein Impulsraster $T_1$ bis $T_6$ erhalten, das der Fig. 3 entspricht, wobei die Kommutierungsblindleistung nunmehr vom Synchronmotor 10 zur Verfügung gestellt wird.

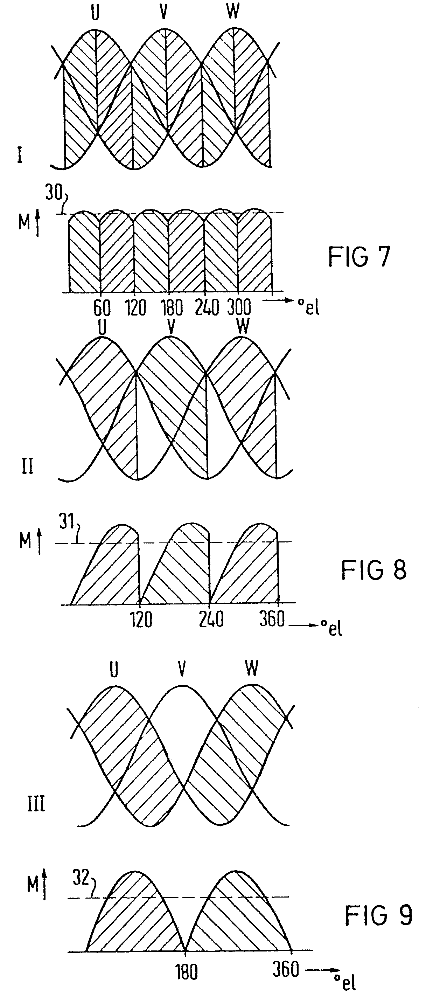

In den Fig. 7 bis 9 ist für die Drehzahlbereiche I bis III jeweils der Verlauf der Maschinenspannungen u, v und w an der dreiphasigen Wicklung des Synchronmotors 10 und der Momentverlauf M bezogen auf die Drehperiode in °el aufgezeichnet.

Fig. 7 zeigt die normale Kommutierung im Drehzahlbereich I. Das damit erhaltene mittlere Drehmoment $M_m$ des Synchronmotors 10 beträgt 95% des Spitzenwertes $\hat{M}$, wie in Fig. 7 mit der strichpunktierten Linie 30 gezeigt ist.

Fig. 8 zeigt den Verlauf der Maschinenspannungen u, v und w im Drehzahlbereich II und den zugehörigen Momentenverlauf M, wobei Fig. 8 eine zyklische Kommutierung in beiden Brückenzweigen WR1 und WR2 im Abstand von jeweils 120° el gemäß Fig. 5 zugrunde gelegt ist. Die gestrichelte Linie 31 zeigt, daß das mittlere Drehmoment $M_m$ gegenüber dem im Drehzahlbereich I erhaltenen Drehmoment abgesunken ist und 71% des Spitzenwertes $\hat{M}$ beträgt. Auch die Welligkeit des Momentenverlaufs ist angewachsen. In den meisten Anwendungsfällen spielt weder der Abfall des mittleren Drehmomentes, noch die größere Momentenwelligkeit eine Rolle. Dies gilt insbesondere falls der Stromrichter nach Fig. 1 zum Antrieb von Lüftern, Zentrifugen, Kompressoren usw. benutzt wird. Der Fig. 8 ist weiterhin der Vorteil des Kommutierungsverfahrens gemäß Fig. 5 im Vergleich mit dem Kommutierungsverfahren gemäß Fig. 4 zu entnehmen. Bei den Kommutierungsverfahren gemäß Fig. 5 wird jeweils bei einem Drehmoment kommutiert, das wesentlich größer als Null ist. Kurzfristige, durch die Zwangskommutierung bedingte Momenteinbrüche, die aufgrund einer Totzeit gegebenenfalls sogar zu einem negativen Moment führen können, wirken sich daher nicht aus, im Gegensatz zum Kommutierungsverfahren nach Fig. 4, wo, wie später noch gezeigt wird, die Zwangskommutierung bei einem Moment M eingeleitet wird, das in der Nähe von Null liegt.

Fig. 9 zeigt den Verlauf von u, v und w und den Momentenverlauf M im Drehzahlbereich III, in dem eine Kommutierung gemäß einer Einphasenbrücke nur jeweils nach 180° el stattfindet. Die gestrichelte Linie 32, die wiederum die Größe des mittleren Drehmomentes $M_m$ angibt, zeigt, daß das mittlere Drehmoment $M_m$ im Drehzahlbereich III gegenüber dem Drehzahlbereich II nur noch geringfügig abgesunken ist. Das mittlere Drehmoment $M_m$ beträgt 64% des maximalen Drehmomentes $\hat{M}$. Die Momentenwelligkeit hat erneut zugenommen, wie oben jedoch bereits betont, spielt dies in den meisten Anwendungsfällen keine wesentliche Rolle.

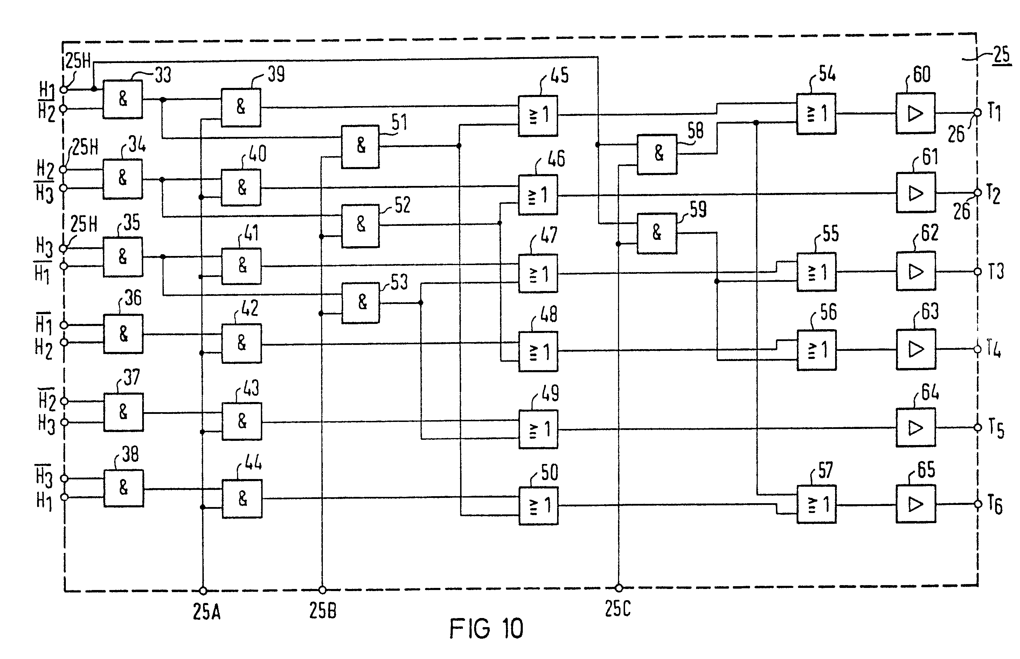

Fig. 10 zeigt ein Ausführungsbeispiel für den Steuersatz 25, mit dem die Stromrichterventile 1 bis 6 des Wechselrichters WR bei Drehzahlen angesteuert werden, die in den Drehzahlbereichen I bis III liegen, wobei gleichzeitig zur Einleitung jeder Kommutierung der Schalter der Hilfskommutierungseinrichtung 29 geschlossen wird. An den Eingängen 25H stehen paarweise die Signale $H_1$ bis $\overline{H}_3$ an, wie sie mit den Verknüpfungsgleichungen im Zusammenhang mit Fig. 3 angegeben sind. Die jeweils einander zugeordneten Signale $H_1$ bis $\overline{H}_3$ sind in Fig. 10 eingezeichnet. Jeweils zwei einander zugeordneten Eingängen 25H ist ein logisches Verknüpfungsglied mit konjunktiver Verknüpfung 33 bis 38 nachgeschaltet. Der Ausgang jedes UND-Gliedes 33 bis 38 ist jeweils dem ersten Eingang eines weiteren UND-Gliedes 39 bis 44 zugeführt. Der zweite Eingang jedes UND-Gliedes 39 ist mit dem Eingang 25A verbunden, an dem das Signal A des Grenzwertmelders 24 ansteht. Dem Ausgang jedes UND-Gliedes 39 bis 44 ist ein Eingang jeweils eines logischen Verknüpfungsgliedes mit diskonjunktiver Verknüpfung 45 bis 50 nachgeschaltet. Der zweite Eingang der ODER-Glieder 45 und 50 ist mit dem Ausgang eines UND-Gliedes 51 verbunden, dessen ersten Eingang der Ausgang des UND-Gliedes 33 zugeführt ist. Der zweite Eingang jedes ODER-Gliedes 46 und 48 ist mit dem Ausgang eines UND-Gliedes 52 verbunden, dessen erster Eingang mit dem Ausgang des ODER-Gliedes 34 verknüpft ist. Ebenso sind die zweiten Eingänge der ODER-Glieder 47 und 49 mit dem Ausgang eines UND-Gliedes 53 verbunden, an dessen ersten Eingang der Ausgang des UND-Gliedes 35 liegt. Die zweiten Eingänge der UND-Glieder 51 bis 53 sind mit dem Eingang 25B verbunden, an dem das Signal B ansteht, das den Drehzahlbereich II kennzeichnet. Ein logisches »1«-Signal am Eingang 25B führt zu einer logischen Verknüpfung, wie sie im Zusammenhang mit Fig. 5 bereits erläutert wurde. Der Ausgang jedes der ODER-Glieder 45, 47, 48 und 50 ist dem ersten Eingang jeweils eines ODER-Gliedes 54 bis 57 zugeführt. Der zweite Eingang jedes ODER-Gliedes 54 und 57 ist mit dem Ausgang eines UND-Gliedes 58 verbunden, dessen erstem Eingang das Signal $H_1$ des Rotorlagegebers 15 zugeführt ist. Der zweite Eingang jedes ODER-Gliedes 55 und 56 ist mit dem Ausgang eines UND-Gliedes 59 verbunden, dessen invertierendem Eingang ebenfalls das Rotorlagesignal $H_1$ zugeführt ist. Die zweiten Eingänge der UND-Glieder 58 und 59 sind mit dem Eingang 25C verbunden, an dem das Signal C des Grenzwertmelders 24 im Drehzahlbereich III ansteht. Ist das Signal C ein logisches »1«-Signal, so erhält man eine logische Verknüpfung, wie sie im Zusammenhang mit Fig. 6 erläutert wurde. Den Ausgängen der ODER-Glieder 54, 46, 55, 56, 49 und 57 ist jeweils ein Impulsverstärker 60 bis 65 nachgeschaltet, der jeweils mit einem der Ausgänge 26 verbunden ist. Die über die Ausgänge 26 erzeugten Impulse $T_1$ bis $T_6$ der Impulsraster gemäß Fig. 3 bis 6 sind an den betreffenden Ausgängen angegeben. Mit dem in Fig. 10 erläuterten Steuersatz 25 erhält man gemäß den logischen Verknüpfungen, die im Zusammenhang mit Fig. 6 angegeben sind, folgendes logisches Schema für die Drehzahlbereiche I bis III

| | A | B | C |
|---|---|---|---|
| Drehzahlbereich I (Fig. 3) | 1 | 0 | 0 |
| Drehzahlbereich II (Fig. 5) | 0 | 1 | 0 |
| Drehzahlbereich III (Fig. 6) | 0 | 0 | 1 |

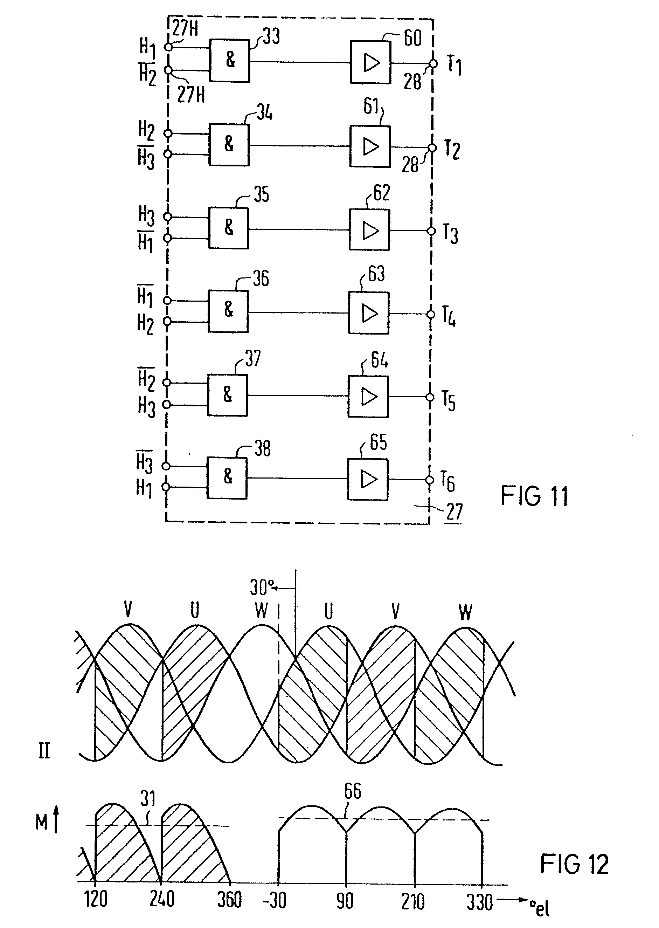

Zur Vervollständigung ist in Fig. 11 ein Ausführungsbeispiel des Steuersatzes 27 gezeigt, mit dem die Zündimpulse $T_1$ bis $T_6$ der Stromrichterventile 1 bis 6 des Wechselrichters WR beim Betrieb im Drehzahlbereich erzeugt werden, der opberhalb der Mindestdrehfrequenz liegt. Entsprechend den im Zusammenhang mit Fig. 3 angegebenen logischen Verknüpfungen liegen die Signale $H_1$ bis $\overline{H}_3$ paarweise an den Eingängen 27H. Wie im Ausführungsbeispiel nach Fig. 10 sind diesen Eingängen UND-Glieder 33 bis 38 nachgeschaltet. Die Ausgänge der UND-Glieder 33 bis 38 sind über Impulsverstärker 60 bis 65 direkt mit den Ausgängen 28 verbunden, denen die gegebenenfalls phasenverschobenen Impulse $T_1$ bis $T_6$ entsprechend Fig. 3 zuzuordnen sind.

Fig. 12 zeigt eine Möglichkeit, mit der das mittlere Moment und die Momentenwelligkeit im Drehzahlbereich II verbessert werden kann. Dabei sind in Fig. 12 die gleichen Größen wie in Fig. 8 aufgetragen. Der linke Teil der Fig. 12 repräsentiert eine Kommutierung, wie sie nach dem Impulsraster gemäß Fig. 4 erhalten wird. Der Fig. 12 ist der bereits erwähnte Nachteil zu entnehmen, daß bei einer Kommutierung entsprechend dem Impulsraster nach Fig. 4 die Zwangskommutierung bei einem Moment erfolgt, das sehr klein ist. Momenteneinbrüche während des Zeitraums, der für die Zwangskommutierung erforderlich ist, können daher zu einer starken Vergrößerung der Momentenwelligkeit führen.

Im rechten Teil der Fig. 12 ist gezeigt, wie sich die Momentenwelligkeit im Drehzahlbereich II grundsätzlich verbessern läßt. Wird für den Drehzahlbereich II der Steuersatz 25 so ausgebildet, daß eine Vorzündung von 30° el erfolgen kann, so erhält man einen Drehmomentenverlauf, der nur eine geringe Momentenwelligkeit aufweist und bei dem das mittlere Drehmoment $M_m$ wesentlich vergrößert ist. Es beträgt, wie die strichpunktierte Linie 66 zeigt, 83% des Spitzenwertes des Momentes $\hat{M}$, im Vergleich zu 71% gemäß der gestrichelten Linie 31 im linken Figurenteil.

## Patentansprüche

1. Verfahren zum Betrieb eines Umrichters mit Gleichstromzwischenkreis, einem Wechselrichter (WR) mit Stromrichterventilen in Drehstrombrückenschaltung und einer Drehfeldmaschine (10) als Last, bei dem bei Drehzahlen der Drehfeldmaschine, die größer als eine maschinenbedingte Mindestdrehzahl sind, der Umrichter lastgeführt ist und die Kommutierungsspannung für die Stromrichterventile des Wechselrichters von der Drehfeldmaschine geliefert wird und bei dem bei Drehzahlen, die kleiner als die Mindestdrehzahl sind, die Stromrichterventile des Wechselrichters mit einer Hilfskommutierungseinrichtung (29) kommutiert werden, wobei wenigstens bei Drehzahlen, die größer als die Mindestdrehzahl sind, in einer Drehperiode eine sechsmalige zyklische Kommutierung stattfindet, bei der alternierend in beiden Brückenhälften der Drehstrombrücke jeweils vom Stromrichterventil eines Stromrichterzweigs auf ein nachfolgend stromführendes Stromrichterventil eines Stromrichterzweigs der gleichen Brückenhälfte (WR1 bzw. WR2) kommutiert wird, dadurch gekennzeichnet, daß die Drehzahlen, die kleiner als die Mindestdrehzahl sind, in wenigstens zwei Drehzahlbereiche (I, II) unterteilt werden, daß in einem ersten, bei der Drehzahl Null beginnenden Drehzahlbereich (I) die sechsmalige Kommutierung pro Drehperiode beibehalten wird und daß in einem sich an den ersten Drehzahlbereich anschließenden zweiten Drehzahlbereich (II) eine dreimalige zyklische Kommutierung pro Drehperiode stattfindet, bei der bei jeder Kommutierung in den Stromrichterzweigen (1a, 2a, 3a bzw. 4a, 5a, 6a) beider Brückenhälften (WR1; WR2) der Drehstrombrückenschaltung (WR) gleichzeitig vom Stromrichterventil (1, 2, 3 bzw. 4, 5, 6) eines Stromrichterzweiges (1a, 2a, 3a bzw. 4a, 5a, 6a) auf ein nachfolgend stromführendes Stromrichterventil (1, 2, 3 bzw. 4, 5, 6) eines anderen Stromrichterzweiges (1a, 2a, 3a bzw. 4a, 5a, 6a) kommutiert wird.

2. Verfahren nach Anspruch 1, dadurch gekennzeichnet, daß in einem sich an den zweiten Drehzahlbereich (II) anschließenden dritten Drehzahlbereich (III) eine zweimalige zyklische Kommutierung pro Drehperiode stattfindet, wobei die Drehstrombrücke (WR) als Einphasenbrücke betrieben wird, wozu die Stromrichterventile (1 bis 6) von zwei Stromrichterzweigen (1a bis 6a) mit gemeinsamem Hauptanschluß (7 bis 9) ungezündet bleiben.

## Claims

1. A process for the operation of a converter having an intermediate d. c. circuit, an inverter (WR) with current rectifier valves in a three-phase bridge circuit and having an induction machine (10) as a load, wherein the converter is load-commutated when the speed of the induction machine is higher than a minimum speed which is conditional upon the machine, and the commutation voltage for the current rectifiers of the inverter is supplied by the induction machine, and wherein at speeds lower than the minimum speed the current rectifiers of the inverter are commutated by means of an auxiliary commutation device (29), where at least at speeds which are higher than the minimum speed, a sixfold cyclic commutation takes place in a period of rotation, in which commutation takes place from the current rectifier of a current rectifier branch to a consecutively current-carrying current rectifier of a current rectifier branch of the same bridge half (WR1 or WR2 as the case may be) in an alternating fashion in both bridge halves of the three-phase bridge, characterised in that speeds lower than the minimum speed are divided into at least two speed ranges (I, II) that in a first speed range (I) commencing at the speed zero the sixfold commutation for each period of rotation is retained, and that in a second speed range (II) following the first speed range a three-fold cyclic commutation takes place for each period of rotation, wherein in each commutation in the current rectifier branches (1a, 2a, 3a or 4a, 5a, 6a as the case may be) of both bridge halves (WR1; WR2) of the three-phase bridge circuit (WR) commutation takes place simultaneously from the current rectifier (1, 2, 3 or 4, 5, 6 as the case may be) of a current rectifier branch (1a, 2a, 3a or 4a, 5a, 6a as the case may be) to a consecutively current-carrying current rectifier (1, 2, 3 or 4, 5, 6 as the case may be) of another current rectifier branch (1a, 2a, 3a or 4a, 5a, 6a as the case may be).

2. A process as claimed in Claim 1, characterised in that a third speed range (III) follows the second speed range (II), in which a two-fold cyclic commutation takes place for each period of rotation, where the three-phase bridge (WR) is operated as a single-phase bridge, for which purpose the current rectifiers (1 to 6) of two current rectifier branches (1a to 6a) having a common main terminal (7 to 9) remain unignited.

**Revendications**

1. Procédé de mise en œuvre d'un convertisseur comportant un circuit intermédiaire à courant continu, un onduleur (WR) comportant des valves de redressement branchées selon un montage en pont triphasé, et une machine à champ tournant (10) servant de charge, et selonlequel dans le cas de vitesses de rotation de la machine à champ tournant, qui sont supérieures à une vitesse de rotation minimale conditionnée par la machine, le convertisseur est commuté par la charge et la tension de commutation pour les valves de redressement de l'onduleur est délivrée par la machine à champ tournant, et selon lequel dans le cas de vitesses de rotation qui sont inférieures à la vitesse de rotation minimale, les valves de redressement de l'onduleur sont commutées au moyen d'un dispositif de commutation auxiliaire (29), auquel cas il se produit, au moins pour des vitesses de rotation qui sont supérieures à la vitesse de rotation minimale et pendant une période de rotation, une commutation cyclique sextuple lors de laquelle il se produit en alternance, dans les deux moitiés du pont triphasé, une commutation respectivement depuis la valve de redressement d'une branche de redressement du courant à une valve de redressement, traversée ultérieurement par le courant, d'une branche de redressement du courant de la même moitié (WR1 ou WR2) du pont, caractérisé par le fait que les vitesses de rotation, qui sont inférieures à la vitesse de rotation minimale, sont réparties dans au moins deux plages (I, II) de vitesses de rotation, que la commutation sextuple pour chaque période de rotation est conservée dans une première plage de vitesses de rotation (I) commençant par la vitesse de rotation nulle, et que dans une seconde plage de vitesses de rotation (II), de raccordant à la première plage de rotation, il se produit pour chaque période de rotation une commutation cyclique triple pour laquelle, lors de chaque commutation dans les branches de redressement du courant (1a, 2a, 3a ou 4a, 5a, 6a) des deux moitiés du pont (WR1, WR2) du circuit en pont triphasé (WR), il se produit simultanément une commutation depuis la valve de redressement (1, 2, 3 ou 4, 5, 6) d'une branche de redressement de courant (1a, 2a, 3a ou 4a, 5a, 6a) sur une valve de redressement (1, 2, 3 ou 4, 5, 6), traversée ultérieurement par le courant, d'une autre branche de redressement de courant (1a, 2a, 3a ou 4a, 5a, 6a).

2. Procédé suivant la revendication 1, caractérisé par le fait que dans une troisième plage (III) de vitesses de rotation se raccordant à la seconde plage (II) de vitesses de rotation, il se produit pour chaque période de rotation une commutation cyclique double, auquel cas le pont triphasé (WR) fonctionne en pont monophasé et à cet effet les valves de redressement (1 à 6) de deux branches de redressement de courant (1a à 6a) possédant une borne principale commune (7 à 9) restent non amorcées.

FIG 1

FIG 2

FIG 3

FIG 4

FIG 5

FIG 6

FIG 7

FIG 8

FIG 9

FIG 10

FIG 11

FIG 12